# EUROPEAN PATENT APPLICATION

(11) **EP 3 804 988 A1**
(43) Date of publication of application: **14.04.2021**
(21) Application number: 19202821.5
(22) Date of filing: 11.10.2019
(51) Int. Cl.: B32B 37/15, B32B 41/00

(54) **IMPRESSION ROLLER, AND A METHOD FOR MANUFACTURING SUCH**

(71) Applicant: Tetra Laval Holdings & Finance S.A., 1009 Pully (CH)
(72) Inventor: LASSON, Rolf, 234 39 Lomma (SE); SAMUEL, David, 21581 Malmö (SE)
(74) Representative: Tetra Pak - Patent Attorneys SE

(57) **Abstract**

An impression roller (10) for use with a lamination system (100) configured to produce a packaging material (20) is provided. The impression roller comprises a rigid core (12) exhibiting a circular-cylindrical jacket surface, and a layer (14) of elastic material arranged radially outside said rigid core (12). The impression roller (10) further comprises a sleeve (16) of fluoropolymer material arranged radially outside the layer (14) of elastic material and extending along the major part of the longitudinal extension of the layer (14) of elastic material.

## Description

### Technical Field

The invention relates to an impression roller, and in particular to an impression roller for use with a lamination system configured to produce a packaging material. The invention also relates to a method for manufacturing such impression roller.

### Background Art

Disposable packaging containers, particularly those for storing liquids, are frequently produced from a packaging material which consists of a core material layer of paper, which layer is covered with thermoplastic materials and in some cases also with a barrier layer, such as aluminium foil. The packaging material is frequently supplied in the form of webs which are reeled on storage reels and which, after having been unrolled from their storage reel, are converted, by means of folding, into packaging containers in automatic packaging machines.

A commonly occurring package of this type is that which is marketed under the trade name TETRA BRIK and which is preferably used for liquid filling material of the milk, fruit juice, etc. type. This packaging container is produced in automatic packaging and filling machines in such a way that the web which is unrolled from the storage reel is transformed into a tube by the edges of the web being joined in an overlap seam, after which the tube which has been formed is filled with the intended filling material and subdivided into individual packaging containers by means of repeated transverse seals, which are arranged at a distance from each other and at right angles to the tube. After the filling material which has been supplied has been enclosed in this way in sealed-off parts of the tube, these parts are separated from the tube by means of cuts made in the said transverse sealing zones. The subdivided tube parts are then shaped, by means of folding along crease lines which are arranged in the packaging material, to form packaging containers of the desired shape, for example a parallelepipedic shape.

Packages of this type are frequently provided with opening structures in the form of holes, openings, or slits which are made in the packaging material and which are covered with strips which can be torn off and which are normally termed "pull-tabs". Alternatively the packaging device is provided with an opening device made of plastics, for example in the form of a pouring spout having a screw top for reclosing, which opening device is only allowed to penetrate the packaging laminate in connection with the packaging being opened and the product being used. In this connection, the packaging laminate is provided with an opening which consists of a cut or punched-out hole in the core material layer, over which hole an aluminium foil barrier and thermoplastic polymer layers have been laminated. This is also the case for smaller holes intended for insertion of a straw, which may be provided in the packaging material by the same process as described above.

EP1345856 by the same applicant describes an impression roller which was developed for solving problems related to lamination quality and poor lamination pressure, especially at the areas of the holes or slits in the core material layer.

The above-mentioned prior art document addresses the issue of poor pressure in the press nip in the region of the holes/slits, and the necessity, in the press nip, to consider optimization aspects in relation to the adherence between the aluminium foil and the different polymer layers in the regions within the regions of the holes/slits. The polymer layer which is to be laminated to the aluminium foil is extruded in molten form directly into the press nip and has to be pressed together by the nip before the polymer material cools down too much, resulting in that the material solidifies. This means that the line load in the nip is only effective for laminating during the course of a first, relatively short, press nip length. A press nip length which exceeds this effective press nip length only leads to that the line load is distributed over a greater area, which is a disadvantage since the pressure in the press nip then becomes lower. A nip roller having a surface of relatively high hardness, such as greater than 80-90 Shore A, will result in a short press nip length. However, such relatively hard surface also results in poor pressure by the roller surface in the regions of the holes/slits, and consequently in poor adherence between the laminate layers within these regions.

In view of this EP1345856 presented a solution where the outer surface of the impression roller is provided with a double layer of elastic material, the inner layer being harder than the outer layer.

The prior art roller described above has successfully contributed to improved lamination quality in the areas of laminated holes. However, during lamination of such laminated holes the molten material, i.e. the extrudant, may come into contact with the impression roller which in some cases may lead to undesired polymer deposits onto the surface of the impression roller. Typically the extruder is operating at temperatures exceeding 300°C, which is normally beyond the temperature resistance of the elastic material of the surface of the impression roller.

Therefore, it has been suggested to provide the impression roller with circumferential strips of polytetrafluoroethylene (PTFE) tape material, wherein the axial position of the strip is determined by the position of the laminated hole during production. The strip will protect the elastic surface of the impression roller if any hot extrudant should leak onto the impression roller.

In modern manufacturing, production speed can be as high as up to 650 m/min. This causes great stress on the impression roller and the strips of PTFE tape material, which may result in quite frequent service and maintenance of the impression roller. As every downtime of the production facility is highly undesired, there is a need for an improved impression roller.

### Summary

It is an object of the invention to at least partly overcome one or more of the above-identified limitations of the prior art. In particular, it is an object to provide an impression roller which allows for increased life time, without causing deprived lamination quality at the area of pre-laminated holes.

To solve these objects an impression roller is provided. The impression roller is configured to be used with a lamination system, which in turn is configured to produce a packaging material. The impression roller comprises a rigid core exhibiting a circular-cylindrical jacket surface, and a layer of elastic material arranged radially outside said rigid core. The impression roller also comprises a sleeve of fluoropolymer material arranged radially outside the layer of elastic material and extending along the major part of the longitudinal extension of the layer of elastic material.

The impression roller is advantageous in that the sleeve will provide much higher stability compared to individual strips of tape, which may under unfortunate circumstances be forced away from their original position on the roller. Further to this, a sleeve extending along the major part of the longitudinal extension of the impression roller allows for different designs of the packaging material, whereby the longitudinal positions of the laminated holes on the web can vary.

The sleeve of fluoropolymer material may have a radial thickness of 0.25 mm or lower, such as in the range of 0.15 - 0.25 mm, such as in the range of 0.19 - 0.25 mm. This has proven to ensure good functionality in terms of pressure distribution and elastic deformation during lamination, while still ensuring sufficient protection of the elastic material underneath the sleeve.

The radial thickness of the sleeve may be constant along its entire longitudinal extension. Accurate pressure is thereby achieved in the entire press nip.

The sleeve may extend along the entire longitudinal extension of the layer of elastic material. The full width of the impression roller is thereby protected by the sleeve, and a maximum packaging material web width can be used.

The outer surface of the sleeve of fluoropolymer material is preferably reduced by abrasive machining, e.g. grinding, honing or polishing, to its final thickness. This means that a substantially thicker sleeve can be mounted onto the layer of elastic material, and that reduction of its thickness can performed when the sleeve is already in place on the impression roller.

The sleeve is made of a fluoropolymer, such as a polymer selected from the group consisting of polytetrafluoroethylene (PTFE) and perfluoroalkoxy alkanes (PFA).

The layer of elastic material may comprise an inner layer and an outer layer. Improved lamination is thereby achieved, as the hardness of the impression roller may be tailored with precision.

Preferably, the hardness of the inner layer is greater than the hardness of the outer layer. Furthermore, the radial thickness of the inner layer is preferably greater than the radial thickness of the outer layer.

According to a second aspect, a lamination system configured to produce a packaging material is provided. The lamination system comprises an impression roller according to the first aspect, and a counter roller, wherein the impression roller and the counter roller together form a press nip.

The lamination system may further comprise an extruder, wherein the lamination system is configured to feed a web of a core material layer into the press nip between the impression roller and the counter roller, and wherein the extruder is configured to provide a laminant thermoplast, i.e. a laminating layer of a thermoplastic polymer, or a plastic lining, i.e. an innermost layer to form the inside surface of the final packaging material and packages made therefrom, as facing at least one of the impression roller or the counter roller, particularly the counter roller.

The laminant thermoplast and/or the plastic lining may be provided as a continuous melt film into the press nip.

According to a third aspect, a method for manufacturing an impression roller is provided. The method comprises i) providing a rigid core exhibiting a circular-cylindrical jacket surface, arranging a layer of elastic material radially outside the rigid core, and iii) arranging a sleeve of fluoropolymer material radially outside the layer of elastic material, said sleeve extending along the major part of the longitudinal extension of the layer of elastic material.

The method may further comprise reducing the radial thickness of the sleeve after arranging the sleeve radially outside the layer of elastic material, preferably by a abrasive machining process.

The sleeve may have a first radial thickness of 0.3 mm or more when the sleeve is arranged radially outside the layer of elastic material, and a second thickness of 0.25 mm or lower, after reducing the radial thickness of the sleeve.

Arranging the sleeve radially outside the layer of elastic material may further comprise attaching the sleeve to the layer of elastic material by means of an adhesive.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1a is an isometric, and partly cross-sectional view of an impression roller according to prior art.
Fig. 1b is a front view of an impression roller according to prior art.
Fig. 2 is an isometric, partly cross-sectional view of an impression roller according to an embodiment.
Fig. 3 is a cross-sectional view of a packaging material.
Fig. 4a is a schematic side view of a lamination system according to an embodiment.
Fig. 4b is a schematic side view of a lamination system according to an embodiment.
Fig. 4c is a schematic side view of a lamination system according to an embodiment.
Fig. 5a is a cross-sectional view of an impression roller, according to an embodiment, prior to abrasive machining
Fig. 5b is a cross-sectional view of the impression roller of Fig. 5a, after abrasive machining.
Fig. 6 is a schematic view of a method for manufacturing an impression roller, according to an embodiment.

### Detailed Description

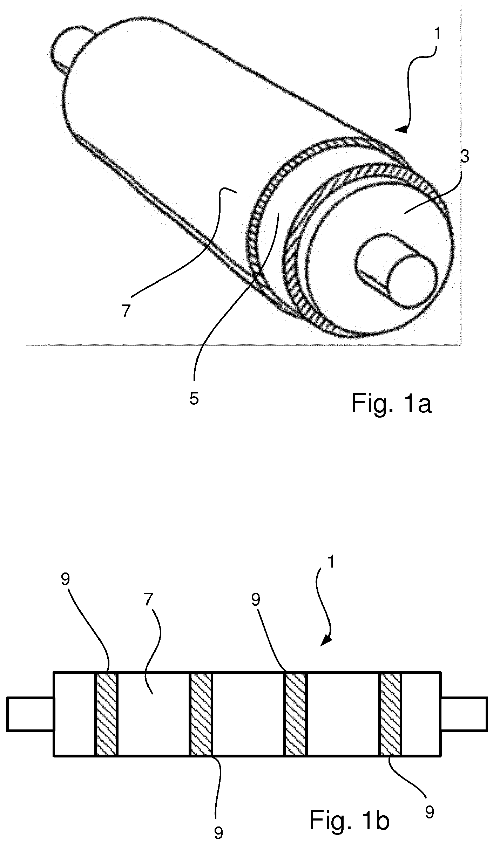

With reference to Fig. 1a a prior art impression roller 1 is illustrated. The impression roller 1 comprises an inner core 3, having an outer surface being provided with a double layer of elastic material. The inner layer 5 of elastic material is harder than the outer layer 7 of elastic material.

In Fig. 1b another prior art impression roller 1 is shown. The outer layer 7 of elastic material is provided with four strips 9 of Teflon tape, arranged at the longitudinal position where the laminated holes of the core material layer are intended to pass.

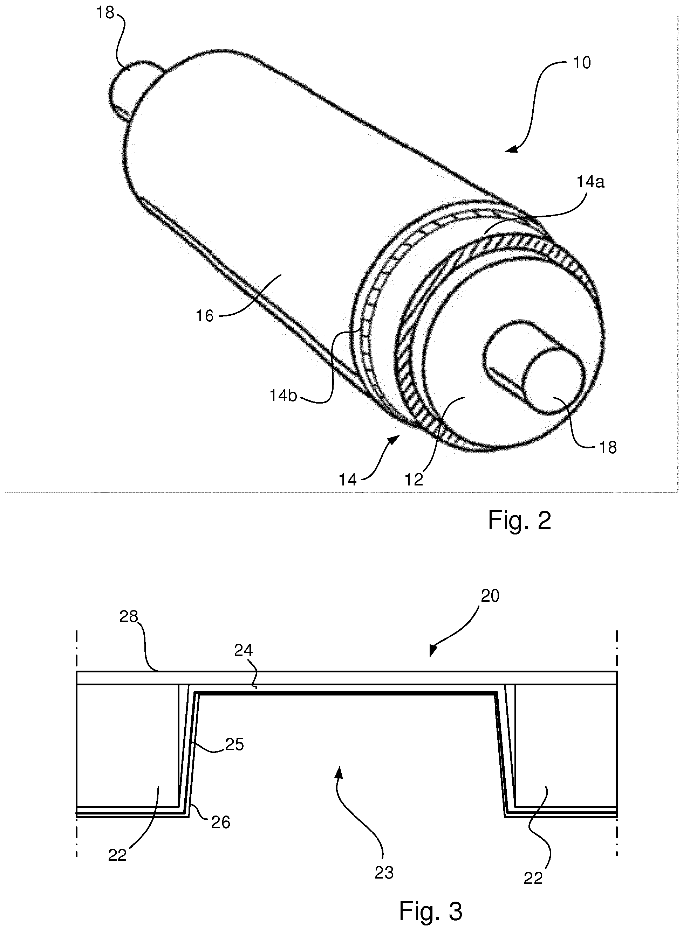

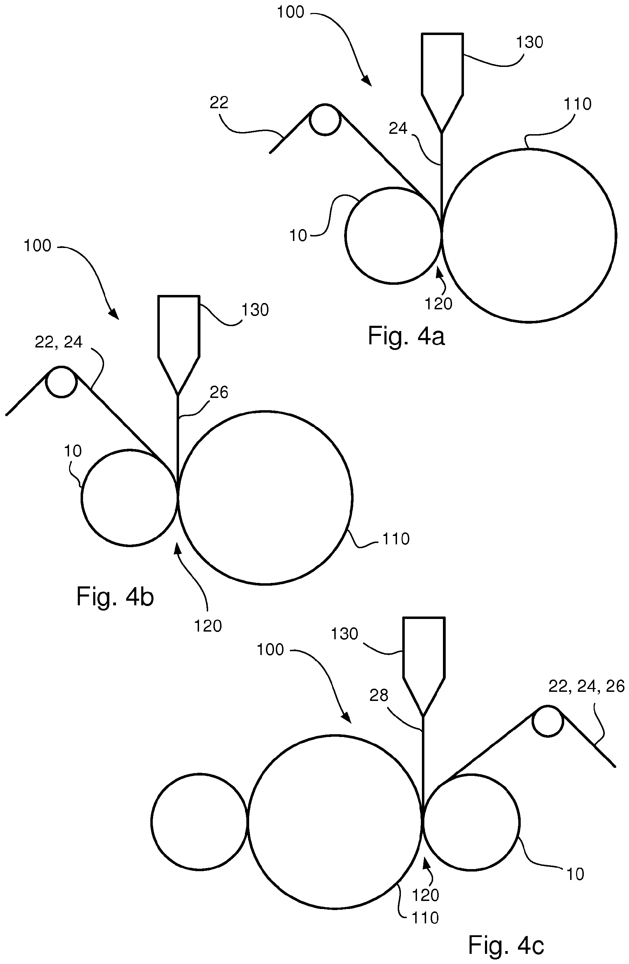

Now turning to Fig. 2, an embodiment of an impression roller 10 is shown. The impression roller 10 is specifically constructed to be used with a lamination system 100, as will be described below with reference to Figs. 4a-c. As can be seen in Fig. 2 the impression roller 10 has a rigid core 12, preferably made of metal such as stainless steel or similar, exhibiting a circular-cylindrical jacket surface. Outside the rigid core 12 a layer 14 of elastic material is arranged. The layer of elastic material, such as rubber, is provided radially outside the rigid core 12 such that the entire core 12 is surrounded by the layer 14 of elastic material.

As is further shown in Fig. 2 the layer 14 of elastic material is preferably formed by an inner layer 14a and an outer layer 14b, both layers 14a-b being formed by an elastic material such as rubber. However, in order to ensure a relatively short press nip length in combination with a good lamination adherence in the area of laminated holes, the hardness of the inner layer 14a is greater than the hardness of the outer layer 14b. Also, the radial thickness of the inner layer 14a is greater than the radial thickness of the outer layer 14b.

One suitable configuration of the entire layer 14 of elastic material is the following: the rigid steel core 12 having a diameter of 310 mm, the inner layer 14a of elastic material having a thickness of 18 mm and having a hardness of 90 Shore A, and the outer layer 14b of elastic material having a thickness of 2 mm and having a hardness of 70 Shore A.

A sleeve 16 of fluoropolymer material is arranged radially outside the layer 14 of elastic material. The sleeve 16 extends along the major part of the longitudinal extension of the layer 14 of elastic material; in a preferred embodiment, the sleeve 16 covers the entire length of the impression roller 10.

The thickness of the sleeve 16 is substantially less than the thickness of any of the layers 14a-b of elastic material. In some embodiments, the sleeve 16 has a radial thickness of 0.25 mm or lower, such as in the range of 0.15 - 0.25 mm, such as in the range of 0.19-0.25 mm. Such thickness will cause no or very little effect on the physical properties of the impression roller 10 and its surface in terms of hardness and lamination performance, but will still protect the layer 14 of elastic material from excessive heat of extruded polymer melt.

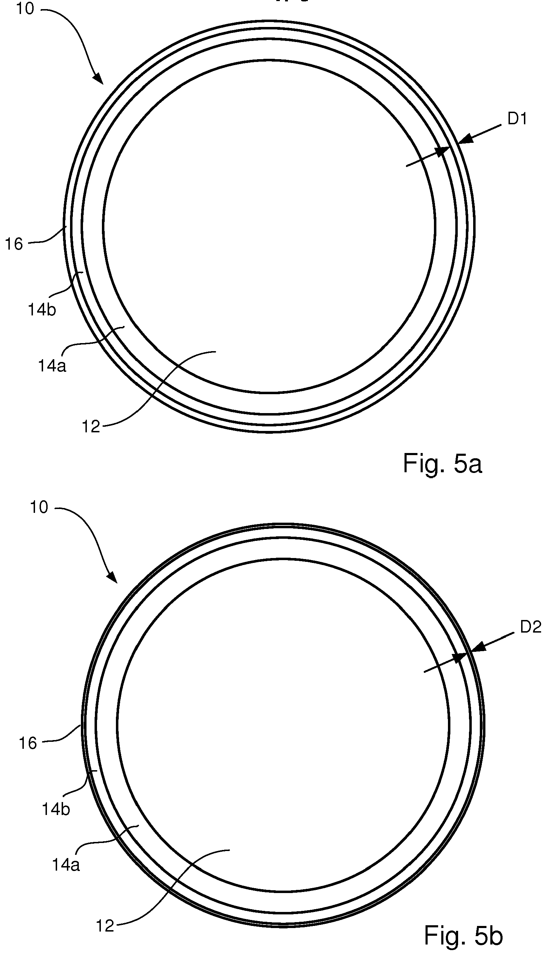

As will be further explained with respect to Figs. 5a-b, arranging the sleeve 16 onto the layer 14 of elastic material is very difficult. Therefore, it is suggested to provide a substantially thicker sleeve, and to arrange it onto the layer 14 of elastic material. Due to the increased thickness, the tube-shaped sleeve will be able to withstand the rather high forces required to push it onto the roller along its longitudinal direction to cover the layer 14 of elastic material. An adhesive may be applied between the roller surface and the sleeve in order to secure attachment further, and by heating the sleeve will attach and adapt well around the circumference of the roller. Once in position, the radial thickness of the sleeve 16 is reduced, preferably by a grinding process, such that the radial thickness of the sleeve 16 is constant along its entire longitudinal extension.

The sleeve 16 is preferably made of polytetrafluoroethylene (PTFE) or perfluoroalkoxy alkanes (PFA).

The impression roller 10 is also provided with shafts 18, protruding longitudinally at each end of the roller 10. The shafts 18 are used to rotationally support the roller 10 when mounted in a lamination system 100.

Now turning to Fig. 3, an example of a packaging material 20 is shown in cross-section. It should be noted that Fig. 3 is not to scale, and the description is made in very general terms. A core material layer 22 is provided with one or more cut holes 23; each hole 23 is preferably formed by a complete removal of parts of the core material layer, although in some embodiments the hole 23 is a slit.

The core material layer 22 forms a bulk layer, preferably of a paper or carton that fulfils the requirements to provide stiffness and dimensional stability to a packaging container produced from the packaging material. The cartons normally used are thus fibrous paperboards, i.e. fiberboards having a bulk of a network structure of cellulose fibres, with suitable density, stiffness and capability of resisting possible exposure to moisture. In particular, the type of bulk layers or cartons or paperboards applicable to packaging materials for use with the impression roller described herein, are fibrous structures from homogeneous fibre layers, which advantageously also are configured in an I-beam or sandwich arrangement, with the respective middle layer and flanges being tied to each other over their entire surfaces facing each other. Typical fibres usable for the fibrous bulk are cellulose fibres from chemical pulp, CTMP, TMP, kraft pulp or the like.

The packaging material 20 is provided with a laminant thermoplast 24 which is arranged on one side of the core material layer 22, and extending across the laminated hole 23. The laminant thermoplast 24 may be covered by a barrier layer 25, such as an Aluminum foil, and a plastic lining 26 of a thermoplastic polymer forming the inner side of the packaging material 20, i.e. the side intended to be in contact with the enclosed product of the final package.

The opposite side of the core material layer 22 is covered by a thin layer 28 of thermoplast, forming the outer layer of the packaging material 20.

Suitable materials for forming the laminant thermoplast 24, the plastic lining 26, and the outer layer 28 of thermoplast are well known in the art and will not be described further herein.

Now turning to Figs. 4a-c different embodiments of a lamination system 100 will be described. All embodiments are directed to lamination systems 100 capable of producing a packaging material 20, at least to some extent. Hence, the lamination systems 100 are configured to perform only certain specific processes of the entire converting procedure, i.e. to convert a core material layer 22 to a packaging material 20.

Starting in Fig. 4a, a lamination system 100 comprises an impression roller 10 and a counter roller 110. The counter roller 110 is preferably a water-cooled metal roller 110, while the impression roller 10 is a roller as described above with reference to Fig. 2. The impression roller 10 and the counter roller 110 together form a press nip 120. The lamination system 100 is configured to feed the web of core material layer 22, already provided with one or more laminated holes 23, into the press nip 120 such that the core material layer 22 is facing the impression roller 10 rather than the counter roller 110. This is further explained by the fact that the lamination system 100 also is provided with an extruder 130, being configured to provide a continuous melt film of the laminant thermoplast 24 into the press nip 120, on a side of the core material layer 20 facing the counter roller. The impression roller 10 will thereby not come into direct contact with the hot extruded film other than possibly at the area of the pre-laminated hole 23. Further, the counter roller 110 will ensure active cooling and solidification of the extruded film. A further barrier layer, such as an aluminium foil (not shown), intended to provide gas barrier properties to the packaging material, may be fed into the press nip and laminated to the core material layer, while extruding the melt film, i.e. the molten laminant thermoplast therebetween, thus bonding the core material layer and the aluminium foil layer together.

In Fig. 4b another embodiment is shown, where the lamination system 100 is quite similar to the lamination system of Fig. 4a. In principle the structural design is identical, however some adaptations are made. Most important, the extruder 130 is in this embodiment configured to provide a continuous film of what will form the inside, i.e. the plastic lining 26 forming the inner side of the packaging material 20. The lamination system 100 is consequently also configured to feed the core material layer 22, having the laminant thermoplast 24, and optionally a barrier layer such as an aluminium foil, already laminated thereto, into the press nip 120.

Fig. 4c shows a yet further embodiment, wherein the extruder 130 is now configured to provide a continuous film of the thin outer layer of thermoplast 28. Consequently, the lamination system 100 is configured to feed the core material layer 22, with its laminant thermoplast 24, optional barrier layer and its plastic lining 26, into the press nip 120.

The lamination systems 100 described above with reference to Figs. 4a-c thus form parts of a sequence, meaning that they may be arranged in series in order to manufacture a packaging material 20. The impression roller 10 will provide advantage in each step.

Now turning to Fig. 5a, a cross-sectional view of the impression roller 10 is shown. The impression roller 10 is in a state in which the sleeve 16 has been mounted onto the layers 14a-b of elastic material, but having a radial thickness D1 being greater than what the lamination process allows for. In particular, the sleeve 16 has in this state a first radial thickness D1 of approximately 0.3 mm or more (it should be noted that Figs. 5a-b are not to scale).

The sleeve 16 is subsequently reduced to a thickness D2 by grinding, as is shown in Fig. 5b. The thickness D2 is preferably 0.25 mm or lower, such as in the range of 0.15 - 0.25 mm, such as in the range of 0.19-0.25 mm as has been described earlier.

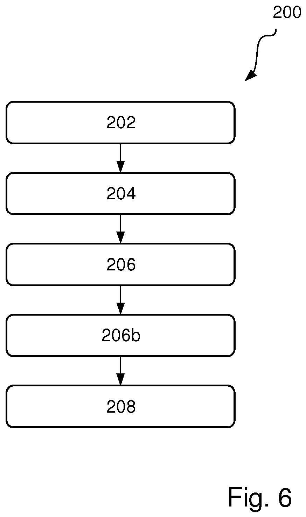

Now turning to Fig. 6 a method 200 is schematically shown. The method 200 is performed for manufacturing an impression roller 10 in accordance with the embodiment shown in Fig. 2.

Starting in step 202, a rigid core 12 is provided, exhibiting a circular-cylindrical jacket surface. The method 200 proceeds with a step 204 of arranging a layer 14 of elastic material radially outside the rigid core 12, and a step 206 of arranging a sleeve 16 of fluoropolymer material radially outside the layer 14 of elastic material. As explained earlier, the sleeve 16 has a continuous periphery and it extends along the major part of the longitudinal extension of the layer 14 of elastic material.

The method 200 preferably comprises a subsequent step 208 of reducing the radial thickness of the sleeve 16 after arranging the sleeve 16 radially outside the layer 14 of elastic material. This step is preferably formed by grinding.

The step 206 of arranging the sleeve 16 radially outside the layer 14 of elastic material may further comprise a step 206b of attaching the sleeve 16 to the layer 14 of elastic material by means of an adhesive.

From the description above follows that, although various embodiments of the invention have been described and shown, the invention is not restricted thereto, but may also be embodied in other ways within the scope of the subject-matter defined in the following claims.

## Claims

1. An impression roller (10) for use with a lamination system (100) configured to produce a packaging material (20), comprising a rigid core (12) exhibiting a circular-cylindrical jacket surface, and a layer (14) of elastic material arranged radially outside said rigid core (12), **characterized by** a sleeve (16) of fluoropolymer material arranged radially outside the layer (14) of elastic material and extending along the major part of the longitudinal extension of the layer (14) of elastic material.

2. The impression roller (10) according to claim 1, wherein the sleeve (16) of fluoropolymer material has a radial thickness of 0.25 mm or lower.

3. The impression roller (10) according to claim 2, wherein the sleeve (16) of fluoropolymer material has a radial thickness in the range of 0.15 - 0.25 mm, such as in the range of 0.19-0.25 mm.

4. The impression roller (10) according to claim 2 or 3, wherein the radial thickness of the sleeve (16) is constant along its entire longitudinal extension.

5. The impression roller (10) according to any of the preceding claims, wherein the sleeve (16) extends along the entire longitudinal extension of the layer (14) of elastic material.

6. The impression roller (10) according to any of the preceding claims, wherein the thickness of the outer surface of the sleeve (16) of fluoropolymer material is reduced by abrasive machining.

7. The impression roller (10) according to any of the preceding claims, wherein the sleeve (16) is made of a polymer selected from the group consisting of polytetrafluoroethylene (PTFE) or perfluoroalkoxy alkanes (PFA).

8. The impression roller (10) according to any of the preceding claims, wherein the layer (14) of elastic material comprises an inner layer (14a) and an outer layer (14b).

9. The impression roller (10) according to claim 8, wherein the hardness of the inner layer (14a) is greater than the hardness of the outer layer (14b).

10. The impression roller (10) according to claim 8, wherein the radial thickness of the inner layer (14a) is greater than the radial thickness of the outer layer (14b).

11. A lamination system (100) configured to produce a packaging material (20), comprising an impression roller (10) according to any of the preceding claims, and a counter roller (110), wherein the impression roller (10) and the counter roller (110) together form a press nip (120).

12. The lamination system (100) according to claim 11, further comprising an extruder (130), wherein the lamination system (100) is configured to feed a web of a core material layer (22) into the press nip (120), and wherein the extruder (130) is configured to provide a laminant thermoplast (24) or a plastic lining (26) onto the web of core material layer as facing one of the impression roller (100) or the counter roller (110).

13. The lamination system (100) according to claim 12, wherein the laminant thermoplast (24) and/or the plastic lining (26) is provided as a continuous melt film into the press nip (120).

14. A method (200) for manufacturing an impression roller (10), comprising:
providing a rigid core (12) exhibiting a circular-cylindrical jacket surface,
arranging a layer (14) of elastic material radially outside the rigid core (12), and
arranging a sleeve (16) of fluoropolymer material radially outside the layer (14) of elastic material, said sleeve (16) is extending along the major part of the longitudinal extension of the layer (14) of elastic material.

15. The method (200) according to claim 14, further comprising reducing the radial thickness of the sleeve (16) after arranging the sleeve (16) radially outside the layer (14) of elastic material.

16. The method (200) according to claim 15, wherein reducing the radial thickness of the sleeve (16) is performed by abrasive machining.

17. The method (200) according to claim 15 or 16, wherein the sleeve (16) has a first radial thickness (D1) of 0.3 mm or more when the sleeve (16) is arranged radially outside the layer (14) of elastic material, and a second thickness (D2) of 0.25 mm or lower after reducing the radial thickness of the sleeve (16).

18. The method according to any of claims 14-17, wherein arranging the sleeve (16) radially outside the layer (14) of elastic material further comprising attaching the sleeve (16) to the layer (14) of elastic material by means of an adhesive.
